Europäisches Patentamt

European Patent Office

Office européen des brevets

(19)

(11) Veröffentlichungsnummer : **0 014 416**
**B1**

(12) **EUROPÄISCHE PATENTSCHRIFT**

(45) Veröffentlichungstag der Patentschrift :
28.04.82

(51) Int. Cl.³ : **B 62 K 11/04**, B 62 M 7/02,
B 60 K 5/02, F 01 P 3/18

(21) Anmeldenummer : 80100434.2

(22) Anmeldetag : 28.01.80

(54) **Triebwerks-Anordnung für Motorräder.**

(30) Priorität : 01.02.79 DE 2903742

(43) Veröffentlichungstag der Anmeldung :
20.08.80 (Patentblatt 80/17)

(45) Bekanntmachung des Hinweises auf die Patenterteilung : 28.04.82 Patentblatt 82/17

(84) Benannte Vertragsstaaten :
AT DE FR GB IT SE

(56) Entgegenhaltungen :
DE - A - 956 384
DE - A - 1 106 627
DE - A - 1 962 539
DE - B - 2 538 172

(73) Patentinhaber : **BAYERISCHE MOTOREN WERKE
Aktiengesellschaft
Postfach 40 02 40
D-8000 München 40 (DE)**

(72) Erfinder : **Fritzenwenger, Josef
Kaiserweg 17
D-8011 Anzing (DE)**

(74) Vertreter : **Schweiger, Erwin
Bayerische Motoren Werke Aktiengesellschaft Postfach 40 02 40 - AJ-20
D-8000 München 40 (DE)**

Imprimerie Jouve, 18, rue St-Denis, 75001 Paris, France

Triebwerks-Anordnung für Motorräder

Die Erfindung betrifft eine Triebwerks-Anordnung für Motorräder mit den Merkmalen der im Oberbegriff des Anspruches 1 beschriebenen Bauart.

Bei einer durch die DE-AS 25 38 172 bekannten Triebwerks-Anordnung dieser Bauart sind die Zylinder beiderseits der in der Längsmittenebene angeordneten Kurbelwelle jeweils paarweise in Boxeranordnung querliegend angeordnet, da aufgrund der seitlich weit ausragenden Zylinder die Baulänge des Triebwerks nach hinten durch den dort für die Beine des Fahrers notwendigen Raum begrenzt ist. Darüber hinaus ist die jeweils doppelte Anordnung der Zylinder, der Zylinderköpfe, der Sauganlage und der Abgasanlage sowohl bezüglich des Bauaufwandes als auch des Gewichtes nachteilig. Auch ist dadurch eine Eindämmung der Geräuschabstrahlung schwierig durchführbar.

Aufgabe der Erfindung ist es, eine Triebwerks-Anordnung für Motorräder zu schaffen, die diese Nachteile vermeidet und eine kompakte Triebwerksanordnung mit einem rationellen Gesamtaufbau einschließlich Nebenaggregaten bei unverändert niedriger Schwerpunktlage des Triebwerks vereinigt. Gleichzeitig wird ein möglichst glattflächiges und symmetrisches Erscheinungsbild des Triebwerks und ferner eine geringe Geräuschabstrahlung sowie günstige Voraussetzungen für die Anordnung einer kompakten Abgasnachbehandlungsvorrichtung nahe dem Austritt der Abgasleitungen aus dem Zylinderkopf angestrebt.

Die Lösung der gestellten Aufgabe wird durch die kennzeichnenden Merkmale des Anspruches 1 erreicht. Weiterbildungen der Erfindung enthalten die Merkmale der Ansprüche 2 bis 5.

Durch die DE-PS 956 384 und 1 106 627 sowie die DE-OS 1 962 539 sind zwar bereits Triebwerksanordnungen für Motorroller und Kraftwagen bekannt, die einen ähnlichen Aufbau mit liegenden Zylindern aufweisen. Jedoch ist bei den Ausbildungen gemäß DE-PS 956 384 und 1 106 627 eine bei Motorrollern übliche kurzbauende Triebwerks-Anordnung für freien Durchstieg zwischen Vorderrad und verkleidetem luftgekühltem Triebwerk vorgesehen, die durch Anordnung eines querstehenden Keilriemengetriebes einerseits bzw. eines neben dem Hinterrad angeordneten Getriebes andererseits ermöglicht ist. Die Ausbildung gemäß DE-OS 1 962 539 ist ausschließlich als Antrieb für Kraftwagen bestimmt und weist im Gegensatz zur Erfindung eine in Fahrtrichtung querliegende Kurbelwelle auf. Alle diese Ausbildungen sind für den Einbau in Verkleidungen vorgesehen und daher sehr unregelmäßig und zerklüftet aufgebaut. Eine Anregung zur erfindungsgemäßen Ausbildung und Anwendung dieser Triebwerks-Anordnungen bei Motorrädern mit freiliegendem Triebwerk ist daher aus diesen Druckschriften trotz bestehenden Bedürfnisses nicht herleitbar, was sich auch aus deren langjährigem Bekanntsein ergibt. In der Zeichnung ist ein Ausführungsbeispiel der Erfindung dargestellt.

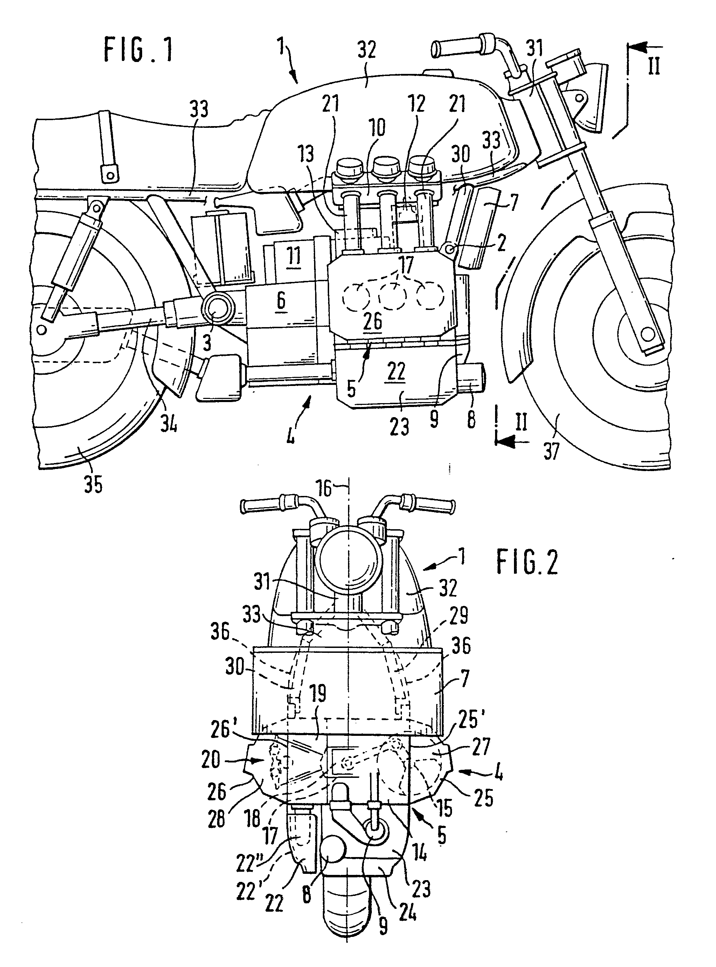

Fig. 1 zeigt eine Triebwerks-Anordnung für ein Motorrad in Seitenansicht und

Fig. 2 eine Stirnansicht gemäß der Linie II-II in Fig. 1.

Ein Motorrad 1 trägt an vorderen und hinteren Verbindungspunkten 2 bzw. 3 ein Triebwerk 4. Das Triebwerk 4 besteht im wesentlichen aus einem Motorblock 5, einem an diesen hinten angeflanschten Getriebe 6, einem an eine obere Vorderkante des Motorblocks 5 schräg nach vorne aufwärts anschließenden Flüssigkeitskühler 7 und weiteren Nebenaggregaten, wie Ölfilter 8, Kühlmittelpumpe 9, Sauganlage 10, Lichtmaschine 11, Zündvorrichtung 12 und Anlasser 13, die an der Vorderseite (8 und 9) bzw. auf der Oberseite (10 bis 13) am Motorblock 5 angebaut sind.

Der Motorblock 5 besteht in seinem Oberteil aus einem Zylinder-Kurbelgehäuse 14, in dem die Kurbelwelle 15 parallel zur Längsmittenebene 16 des Motorrades 1 seitlich versetzt und drei flüssigkeitsgekühlte Zylinder 17 mit von der Kurbelwelle 15 angetriebenen Kolben 18 quer zur Längsmittenebene 16 horizontal liegend angeordnet sind. Zum Motorblock 5 zählt ferner ein flüssigkeitsgekühlter Zylinderkopf 19, der eine Ventilsteuerung 20 für den Betrieb des Triebwerks 4 im Viertaktverfahren enthält. An den Zylinderkopf 19 schließt oben die Ansauganlage 10 über Saugrohre 21 und unten die Abgasanlage 22 an. An der Unterseite des Zylinder-Kurbelgehäuses 14 trägt der Motorblock 5 ein Gehäuseteil 23 mit einem unteren Deckel als Ölwanne 24. Dieses Gehäuseteil 23 enthält neben dem Ölsumpf nicht dargestellte Getriebeteile, wie eine zur Kurbelwelle 15 mit gleicher Drehzahl gegenläufige Massenausgleichswelle und eine von dieser angetriebene Pumpenwelle der Kühlmittelpumpe 9 und einer gleichfalls nicht dargestellten innenliegenden Schmierölpumpe.

Die seitlichen Außenkonturen der Abgasanlage 22 und des Gehäuseteiles 23 sind zum Erzielen eines beiderseitig weitestgehend gleichmäßigen äußeren Erscheinungsbildes des Triebwerks 4 mit ähnlichem Konturenverlauf ausgebildet. Im selben Sinne sind dem Motorblock 5 beiderseits je ein Gehäusedeckel 25 und 26 angeflanscht, die einerseits den Kurbelraum 27 des Zylinder-Kurbelgehäuses 14 und andererseits die Ventilkammer 28 des Zylinderkopfes 19 mit weitestgehend übereinstimmender oder spiegelgleicher Außenkontur abdecken. Die Flanschflächen 25' und 26' des Motorblocks 5 für die Gehäusedeckel 25 und 26 sind durch entsprechende Wahl der Anordnung des Zylinder-Kurbelgehäuses 14 zur Längsmittenebene 16 des Motorrades 1 mit gleichem Abstand parallel zu dieser (16) angeordnet.

Der Flüssigkeitskühler 7 schließt über dem Motorblock 5 an dessen oberer Vorderkante vor dort mit den vorderen Verbindungspunkten 2 verbundenen Rahmenrohren 29 und 30 an und ist an diesen Rahmenrohren 29 und 30.und auch ggf. an der oberen Vorderkante des Motorblocks 5 befestigt.

Über dem Flüssigkeitskühler 7 und den oberen Nebenaggregaten 10 bis 13 des Triebwerks 4 schließen der Steuerkopf 31 und der Tank 32 sowie vom Steuerkopf 31 ausgehende nach hinten führende Rahmenrohre 33 an. An das Getriebe 6 ist eine Kardanwelle 34 für den Antrieb des Hinterrades 35 angeschlossen.

Die beschriebene Triebwerksanordnung weist für ein gutes Fahrverhalten eines Motorrades 1 sowohl einen niedrigen Schwerpunkt als auch eine relativ geringe Baubreite und trotz der zur Längsmittenebene 16 unsymmetrischen Anordnung der querliegenden Zylinder 17 und der längsliegenden Kurbelwelle 15 ein weitestgehend symmetrisches und glattflächiges äußeres Erscheinungsbild auf. Dies ist durch die übereinstimmenden Außenkonturen der beiderseitigen Gehäusedeckel 25 und 26 und der darunter liegenden Teile, Gehäuseteil 23 und Abgasanlage 22, erreicht. Die Außenkontur der Abgasanlage 22 kann im selben Sinne auch auf andere Weise, insbesondere durch ein Abdeckblech 22' vor einem im übrigen unverkleideten Abgasrohrkrümmer 22", gebildet sein.

Die an den Motorblock 5 vorne und oben angebauten Nebenaggregate 8 und 9 bzw. 10 bis 13 stören das glattflächige äußere Erscheinungsbild nur wenig und sind, wie auch die Ventilsteuerung und der Kurbeltrieb nach Abnahme der seitlichen Gehäusedeckel 25 und 26, zu Montage- und Wartungsarbeiten leicht zugänglich.

Schließlich ermöglicht der kompakte Gesamtaufbau des Triebwerkes 4 im Zusammenwirken mit den Kühlmanteräumen für die Flüssigkeitskühlung der Zylinder 17 und des Zylinderkopfes 19, mit der Anordnung der Abgasanlage 22 dicht am Zylinderkopf 19 und der günstigen Anordnung der Sauganlage 10 das Erreichen einer geringen Schallabstrahlung des Triebwerkes. Die eng am Zylinderkopf 19 anliegende Anordnung der Abgasanlage 22 begünstigt darüber hinaus auch noch deren Funktion bei einer Ausbildung als thermische und/oder katalytische Abgasnachbehandlungsvorrichtung.

Das äußere Erscheinungsbild des Triebwerks 4 kann durch zusätzliche Anordnung von Kühlluftleitflächen 36 vor und beiderseits der am Motorblock 5 oben angebauten Nebenaggregate 10 bis 13 noch weiter verbessert werden. Diese Kühlluftleitflächen 36 können leicht abnehmbar befestigt werden, so daß die Zugänglichkeit zu den Nebenaggregaten kaum behindert wird. Zugleich halten diese Kühlluftleitflächen 36 die dem Kühler 7 entströmende Warmluft von den Nebenaggregaten ab. Diesen kann andererseits unter dem Kühler 7 und den Kühlluftleitflächen 36 hindurch Frischluft zur eigenen Kühlung zugeleitet werden.

Aufgrund der Anordnung des Motorblocks 5 unmittelbar angrenzend an den Raumbedarf des Vorderrades 37 des Motorrades 1 sind durch die erfindungsgemäße Anordnung des Triebwerkes 4 neben dem im Ausführungsbeispiel gewählten Drei-Zylinder-Motor und einem kürzeren Zwei-Zylinder-Motor auch Vier- bis Sechs-Zylinder-Motoren mit üblichen Hubraumgrößen ohne negative Auswirkungen auf die Gesamtlänge des Motorrades 1 anwendbar.

**Ansprüche**

1. Triebwerks-Anordnung für Motorräder (1),
— mit einem aus einem flüssigkeitsgekühlten Motorblock (5) und einem Getriebegehäuse bestehenden Triebwerk (4),
— das im wesentlichen freiliegend symmetrisch zur Längsmittenebene des Motorrades (1) angeordnet ist und
— das den Raum zwischen Vorder- und Hinterrad weitgehend ausfüllt, und
— mit einem etwa vertikal und querstehend in Fahrtrichtung gesehen an der Vorderseite des Motorblocks angeordneten Flüssigkeitskühler (7),
— wobei in Fahrtrichtung gesehen mehrere parallele Zylinder (17) querliegend und die Kurbelwelle (15) längsliegend,
— das Getriebegehäuse unter und/oder hinter dem Motorblock (5) und
— ein Gehäusedeckel (2b) für Ventilkammern als symmetrische Längsaußenbegrenzung des Triebwerkes (4) angeordnet sind
dadurch gekennzeichnet,
— daß die Zylinder (17) in einer einzigen Reihe nach einer Seite gerichtet sind,
— daß die Kurbelwelle (15) nach der anderen Seite aus der Längsmittenebene (16) des Motorrads (1) parallel versetzt ist und
— daß je ein Gehäusedeckel (25 und 26) für die Ventilkammern (28) einerseits und für den Kurbelraum (27) andererseits beiderseitige symmetrische Längsaußenbegrenzungen des Triebwerkes (4) bilden.

2. Triebwerks-Anordnung nach Anspruch 1, dadurch gekennzeichnet, daß an die Gehäusedeckel (25 und 26) ein Teil einer Abgasanlage (22) einerseits und des Zylinder-Kurbelgehäuses (14) andererseits mit jeweils geringerer etwa symmetrischer Breitenausladung nach unten anschließt.

3. Triebwerks-Anordnung nach Anspruch 1, dadurch gekennzeichnet, daß die Gehäusedeckel (25 und 26) etwa spiegelgleich ausgebildet sind.

4. Triebwerks-Anordnung nach Anspruch 1, dadurch gekennzeichnet, daß der Flüssigkeitskühler (7) an die obere Vorderkante des Motorblockes (5) nach oben anschließt und sich etwa über die volle Breite des Triebwerks (4) erstreckt.

5. Triebwerks-Anordnung nach Anspruch 4, dadurch gekennzeichnet, daß vom Bereich der oberen Vorderkante des Motorblocks (5) zum Steuerkopf (31) des Motorrades (1) schräg nach oben gerichtete Rahmenrohre (29 und 30) ausgehen und daß der Flüssigkeitskühler (7) sich vor diesen Rahmenrohren (29 und 30) und beiderseits seitlich über diese Rahmenrohre (29 und 30) hinaus erstreckt.

## Claims

1. An engine arrangement for motorcycles (1),
— having an engine (4) which comprises a fluid-cooled engine-block (5) and a gear-case,
— which engine is arranged in exposed manner substantially symmetrically with respect to the central longitudinal plane of the motorcycle (1) and
— substantially fills the space between the front wheel and the rear wheel, and
— having a radiator (7) arranged on the front side of the engine block substantially vertically and transversely as seen in the direction of travel,
— in which arrangement a plurality of parallel cylinders (17), as seen in the direction of travel, are disposed transversely and in the longitudinal direction of the crankshaft (15),
— the gear-case is disposed below and/or behind the engine-block (5), and
— a housing cover (26) for valve chambers is arranged as a longitudinal outer boundary means for the engine (4), characterized
— in that the cylinders (17) are arranged in a single row at one side,
— that the crankshaft (15) is displaced in parallel fashion towards the other side from the central longitudinal plane (16) of the motorcycle (1), and
— that a housing cover (25) for the valve chambers (28) on the one hand and a housing cover (26) for the crank chamber (27) on the other hand form, on both sides, symmetrical longitudinal outer boundary means for the engine (4).

2. An engine arrangement according to Claim 1, characterized in that a part of an exhaust unit (22) on the one hand and of the cylinder-crankcase (14) on the other hand adjoin, and extend downwardly from, the housing covers (25 and 26), these parts each having a substantially symmetrical widthwise overhang which is less than that of the housing covers.

3. An engine arrangement according to Claim 1, characterized in that the housing covers (25 and 26) are substantially mirror-symmetrical in shape.

4. An engine arrangement according to Claim 1, characterized in that the radiator (7) adjoins, and is disposed above, the upper front edge of the engine-block (5) and extends over substantially the entire width of the engine (4).

5. An engine arrangement according to Claim 4, characterized in that upwardly-sloping frame-tubes (29 and 30) extend from the region of the upper front edge of the engine-block (5) to the steering head (31) of the motorcycle (1), and that the radiator (7) extends in front of these frame-tubes (29 and 30) and laterally beyond these frame-tubes (29 and 30) on each side.

## Revendications

1. Dispositif propulseur pour motocyclette (1),
— avec un propulseur (4) constitué par un bloc-moteur (5) refroidi par liquide et par un carter de boîte de vitesses,
— propulseur disposé essentiellement en porte-à-faux symétriquement par rapport au plan moyen longitudinal de la motocyclette (1),
— remplissant dans une large mesure le volume entre la roue avant et la roue arrière, et
— avec un radiateur à liquide (7) disposé à peu près verticalement et transversalement en considérant la direction de marche sur la face avant du bloc-moteur,
— plusieurs cylindres parallèles (17) étant disposés transversalement et le vilebrequin (15) longitudinalement en considérant la direction de marche,
— le carter de boîte de vitesses étant disposé sous et/ou derrière le bloc-moteur (5),
— un couvercle de carter (26) pour des chambres de soupapes étant disposé en tant que limitation extérieure longitudinale du propulseur (4),
caractérisé en ce
— que les cylindres (17) sont dirigés suivant une ligne unique d'un côté,
— que le vilebrequin (15) est décalé parallèlement de l'autre côté hors du plan moyen longitudinal (16) de la motocyclette (1) et
— que des couvercles de carter (25 et 26) respectivement pour les chambres de soupapes (28), d'une part, et pour le volume de vilebrequin (27), d'autre part, forment des deux côtés des limitations extérieures longitudinales symétriques du propulseur (4).

2. Dispositif propulseur selon revendication 1, caractérisé en ce qu'aux couvercles de carter (25 et 26) se raccordent vers le bas, avec respectivement une extension en largeur plus faible sensiblement symétrique, une partie d'une installation de gaz d'échappement (22), d'une part, et du carter (14) du cylindre et du vilebrequin, d'autre part.

3. Dispositif propulseur selon revendication 1, caractérisé en ce que les couvercles de carter (25 et 26) sont agencés sensiblement comme images réciproques dans un miroir.

4. Dispositif propulseur selon revendication 1, caractérisé en ce que le radiateur à liquide (7) se raccorde vers le haut au bord avant supérieur du bloc-moteur (5) et s'étend sensiblement sur toute la largeur du propulseur (4).

5. Dispositif propulseur selon revendication 4, caractérisé en ce que des tubes de cadre (29 et 30) dirigés obliquement vers le haut partent de la zone du bord avant supérieur du bloc-moteur (5) vers la tête de commande (31) de la motocyclette (1) et que le radiateur à liquide (7) s'étend en avant de ces tubes de cadre (29 et 30) et latéralement des deux côtés de ces tubes de cadre (29 et 30).

FIG.1

FIG.2